Europäisches Patentamt

European Patent Office

Office européen des brevets

(11) Publication number: **0 414 965 A1**

# EUROPEAN PATENT APPLICATION

(21) Application number: **89202227.8**

(22) Date of filing: **01.09.89**

(51) Int. Cl.5: **C04B 28/02,** C04B 22/06,
C04B 40/02

(43) Date of publication of application:
**06.03.91 Bulletin 91/10**

(84) Designated Contracting States:
**AT BE CH DE ES FR GB GR IT LI SE**

(71) Applicant: **Veldhoen, Hendrikus
Kevelaar 38
NL-4907 KW Oosterhout(NL)**

(72) Inventor: **Veldhoen, Hendrikus
Kevelaar 38
NL-4907 KW Oosterhout(NL)**

(74) Representative: **Prins, Hendrik Willem et al
Octrooibureau Arnold & Siedsma
Sweelinckplein, 1
NL-2517 GK The Hague(NL)**

(54) Method for forming a formed ceramic construction material, and said construction material.

(57) The invention relates to a method for manufacturing a formed ceramic construction material which contains a binder system on a basis of an aluminosilicate component and an alkali metal silicate/alkali metal hydroxide component, whereby the ratio of $SiO_2$ to $(Na_2O + K_2O)$ lies between 1.0 and 2.0, the binder system contains silica fume as accelerator and the curing is performed by heating with microwaves, and to the formed ceramic construction material.

EP 0 414 965 A1

# METHOD FOR FORMING A FORMED CERAMIC CONSTRUCTION MATERIAL AND SAID CONSTRUCTION MATERIAL

The present invention relates to the manufacture of a formed ceramic construction material which can be processed in building constructions in the form of bricks, clinkers, blocks and floor and wall parts. This construction material contains a binder system on a basis of an aluminosilicate component and an alkali metal silicate/alkali metal hydroxide component whereby the ratio of $SiO_2$ to $(Na_2O + K_2O)$ lies between 1.0 and 2.0.

A construction material having such a binder system based on alkali metal-aluminosilicates is described in the European patent application 199.941. The construction material is composed of ash originating from an electro-filter and containing silicon oxide glass and aluminium oxide and/or calcined bauxite through a reaction with an alkali metal silicate solution.

The invention has for its objective to reduce the time which is necessary with the method for the manufacture of the ceramic construction material by increasing the curing speed, with the result that within a shorter period of time a formling is acquired which is form-retaining such that it can be removed from the form mould and handled. In this way the cycle time for the form mould can be considerably shortened.

This is achieved according to the invention in that the binder system contains "silica fume" as accelerator and that heating is performed with microwaves.

"Silica fume" originates as a by-product in the manufacture of silicon or silicon alloys in a flame arc at temperatures in the order of 2000 °C. The formed silicon and silicon oxide vapours are condensed to silicon dioxide as silica fume after reaction with air. Silica fume consists substantially of amorphous silicon (P.K.Mehta and O.E.Gjorv, Cement and Concrete Research, part 12, pp. 587-595, 1982).

Through the combined use of silica fume as accelerator and microwaves for heating a synergetic effect arises as a result of which, in contrast to curing through external heat supply, the formling already possesses 60 to 80% of its final strength after microwave radiation and cooling.

It is noted that the British patent application 2.085.866 describes the use of microwaves for heating a curable construction material. Silica fume as accelerator for the curing speed is not described.

The construction material with this binder system on a basis of alkali metal-aluminosilicates possesses a number of advantages compared to known construction materials on a basis of cement and calcium silicate. Substantially no reversible moisture shrinkage occurs, while after-shrinkage is practically negligible. The construction material is to a considerable extent chemically resistant. Manufacture requires less energy so that the construction material can also be manufactured at a lower cost-price. Because of the chemical reaction for the formation of the alkali metal-aluminosilicate the ratio of $SiO_2$ to $(Na_2o + K_2O)$ should lie between 1.0 and 2.0. With a ratio of 1.1 to 1.7, and preferably 1.2 to 1.4, there results an optimal acceleration of the curing.

The ratio of the aluminosilicate component to the alkali metal silicate/alkali metal hydroxide component amounts to at least 2.5. Should this ratio be less than 2.5 (less silicate) then insufficient use is being made of the curing property and of the binder system. Should the ratio be greater than 2.5 (super-stoicheiometric quantity of aluminosilicate compound) then the aluminosilicate component also functions as filler.

According to the invention, fly ash, pulverized slag, volcanic ash and the like can be applied as aluminosilicate component in the construction material.

For the alkali metal silicate/alkali metal hydroxide component, use can be made of sodium water-glass and potassium water-glass in combination with alkali metal hydroxide to set the required ratio of $SiO_2$ to $(Na_2O + K_2O)$ while the pH should be greater than or equal to 13. In the case of an alkali metal metasilicate no alkali metal hydroxide need be used and the ratio of $SiO_2$ to $(Na_2O + K_2O)$ amounts to 1.0.

Preferably the quantity of added silica fume equals 3-15% by weight. From 3% by weight the binder system works optimally while above 15% by weight the increase in curing speed is relatively small in relation to the extra added quantity of silica fume. More preferably 4-11% by weight of silica fume is added.

The construction material according to the invention is characterized in that an accelerator on a basis of silica fume is incorporated therein. Such an accelerator makes it possible to cure the mixture for curing by using microwaves (magnetron curing) whereby, despite for example the presence of insulating, weight by volume decreasing foam substances or gas bubbles, a formling is acquired in a time span of 1 minute to 1 hour which possesses 60-80% of the final strength and therefore can already be handled and processed.

In the case that the ceramic construction material according to the invention must possess a relatively low weight (300-500 $kg/m^3$) then it is recommended that a weight by volume adjusting agent be incorporated therein. This adjusting agent can consist of:
i) lightweight additive materials such as polystyrene grains, perlite, vermiculite and Lytag and other conventional light filler and additive substances;

ii) products which produce a gas during manufacture which results in the forming of a ceramic construction material with internal, enclosed gas bubbles. These products are known in the state of the art and comprise for example aluminium powder, zinc powder and hydrogen peroxide; and

iii) alkali-resistant foam-forming products. Such products are for instance known in the gas concrete industry and comprise synthetic foaming agents, for example on a basis of alpha-olefine sulphonates and alkylolamides.

These weight by volume adjusting means can be applied individually or in combination in order to manufacture a lightweight ceramic construction material according to the invention.

If an alkali-resistant foam-forming product is used it is recommended that a foam stabilizer also be used. These likewise alkali-resistant products are used universally in the concrete industry and comprise methyl cellulose, methyl ethyl cellulose and the like (dose 0-3% by weight of the total weight).

For curing the mixture is heated for example to 60-95°C, and more preferably to 80-85°C. In such a case a formling is acquired within a time-span of approximately 5 hours which possesses 50% of the final strength.

Through radiation with high frequency energy such as microwaves (magnetron effect) a temperature of 80°C or more is reached within several minutes. In this case a synergetic effect is created because in contrast with curing from external heat the formling already possesses 60-80% of the final strength after cooling.

In the case that a lightweight construction material with a volume of one litre is being manufactured the heating up and curing time amounts to 1 to 3 minutes when using a magnetron oven of 1kW capacity. The heating can take place with ultra-high frequency waves (UHF) of 300 MHz-3 GHz, superhigh frequency waves (SHF) of 3-30 GHz, with waves of 500 kHz-50 MHz (dielectric heating). The officially allocated frequencies for microwaves is 896 and 2450 MHz. The most usual and particularly suitable frequency is 2450 MHz. The allocated frequencies of 13.56 MHz and 27.12 MHz can also be used to accelerate the curing though the effect seems more limited.

The evaporation of water during curing is preferably countered as much as possible. If too much water is extracted from the mixture during curing the transition from a crystalline to an amorphous structure is at least partly blocked. It is this amorphous structure which contributes to the advantageous, decreased reversible moisture-shrinkage and after-shrinkage as well as to the chemical resistance. It is there fore recommended to pack the formling in a watertight packaging. If this packaging is removed too early a crystalline surface layer may then form on the construction material, which layer can disappear through wear and under the influence of environmental conditions.

Following hereinafter are a number of non-limitative examples of compositions for the ceramic construction material according to the invention.

In table 1 a number of examples are given with a variation in the $SiO_2/(Na_2O + K_2O)$ ratio.

Finally, table 2 shows the effect on the weight by volume of the ceramic construction material according to the invention of foam products (polystyrene grains) and gas forming products (aluminium powder).

TABLE 1

| Ceramic construction materials according to the invention with a varying $SiO_2/(Na_2O + K_2O)$ ratio. | | | | | | |
|---|---|---|---|---|---|---|
| Examples | I | II | III | IV | V | VI |
| ratio $SiO_2/(Na_2O + K_2O)$ | 1.0 | 1.2 | 1.4 | 1.7 | 1.4 | 1.4 |
| sand (g) | --- | 450 | --- | --- | --- | --- |
| fly ash (as filler) (g) | 350 | 450 | 290 | 350 | --- | --- |
| fly ash (part bind.sys) (g) | 450 | 450 | 450 | 450 | 450 | 450 |
| silica fume ($SiO_2$) (g) | 65 | 80 | 60 | 65 | 60 | 60 |
| alkali silicate (R = 1.2) (g) | --- | 205 | --- | --- | --- | --- |
| alkali silicate (R = 1.4) (g) | --- | --- | 190 | --- | 190 | 190 |
| alkali silicate (R = 1.7) (g) | --- | --- | --- | 200 | --- | --- |
| Na-metasilicate (R = 1.0) (g) | 60 | --- | --- | --- | --- | --- |
| Portland cement (g) | 20 | 20 | 20 | 20 | 20 | 20 |
| Polystyrene grains (l) | 2 | 1.5 | 2 | 2 | 2 | --- |
| hydrogen peroxide 30% (g) | --- | --- | 9 | --- | 9 | --- |
| aluminium powder (g) | --- | 2 | --- | --- | --- | --- |
| foaming agent (g) | 5 | --- | --- | 5 | --- | --- |
| foam stabilizer (g) | 2 | 2 | 2 | --- | 2 | --- |
| water (g) | 50 | 20 | --- | 20 | --- | --- |
| weight by volume ($kg/m^3$) | 400 | 429 | 370 | 400 | 279 | 1800 |

TABLE II

| The effect of polystyrene and an aluminium powder on the weight by volume of the construction material according to the invention. | | | |
|---|---|---|---|
| Examples | VII | VIII | IX |
| weight by volume ($kg/m^3$) | 1000 | 550 | 400 |
| sand (g) | 300 | 300 | 300 |
| silica fume (g) | 55 | 55 | 55 |
| alkali silicate (R = 3.27) (g) | 135 | 135 | 135 |
| cement (g) | 10 | 10 | 10 |
| aluminium powder (g) | 5 | 1 | 5 |
| polystyrene grains (l) | 0 | 1 | 1 |
| water (g) | 10 | 15 | 15 |

The lightweight construction materials according to the invention (examples I-V and VII-IX) as well as the heavy construction material according to example VI were cured using microwaves and produced a construction material which displays substantially no reversible moisture-shrinkage or after-shrinkage and which is substantially amorphous.

It is finally noted that in addition to the fly ash, pulverized slag and volcanic ash fillers displaying pozzolana characteristics, inert fillers such as sand, stone flour and gravel can also be used with the binder system according to the invention on a basis of alkali metal-aluminosilicates and silica fume as accelerator.

## Claims

1. Method for manufacturing a formed ceramic construction material which contains a binder system on a basis of an aluminosilicate component and an alkali metal silicate/alkali metal hydroxide component,

whereby the ratio of $SiO_2$ to $(Na_2O + K_2O)$ lies between 1.0 and 2.0 and which is cured, **characterized in that** said binder system contains silica fume as accelerator and that the heating is performed with microwaves.

2. Method as claimed in claim 1, **characterized in that** the amount of silica fume amounts to 3-15% by weight and preferably 4-11% by weight.

3. Method as claimed in claim 1 or 2, **characterized in that** the mixture is arranged in a closed, watertight mould.

4. Method as claimed in claims 1-3, **characterized in that** the heating is performed up to a temperature of 60-95°C.

5. Method as claimed in claims 1-4, **characterized in that** the heating is performed with electro-magnetic waves of 300 MHz-3 GHz.

6. Formed ceramic construction material containing a binder system on a basis of an alumino-metal silicate component and an alkali metal silicate/alkali metal hydroxide component whereby the ratio of $SiO_2$ to $(NaO_2 + K_2O)$ lies between 1.0 and 2.0, **characterized in that** said binder system contains silica fume as accelerator.

7. Construction material as claimed in claim 6, **characterized in that** the amount of silica fume amounts to 3-15% by weight and is preferably 4-11% by weight.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | NL-A-8 800 339 (H. VELDHOEN) * whole document * | 1-7 | C 04 B 28/02 C 04 B 22/06 C 04 B 40/02 |
| D,A | GB-A-2 085 866 (J. TEUBERT) | | |
| D,A | EP-A-0 199 941 (DYNAMIT NOBEL AG) | | |

TECHNICAL FIELDS
SEARCHED (Int. Cl.5)

C 04 B

The present search report has been drawn up for all claims

| Place of search | Date of completion of the search | Examiner |
|---|---|---|
| BERLIN | 20-04-1990 | KUEHNE H C |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

 & : member of the same patent family, corresponding
    document

EPO FORM 1503 03.82 (P0401)